# EUROPÄISCHE PATENTSCHRIFT

(11) **EP 1 188 297 B1**
(45) Veröffentlichungstag und Bekanntmachung des Hinweises auf die Patenterteilung: **09.11.2005**
(21) Anmeldenummer: 00952856.3
(22) Anmeldetag: 21.06.2000
(51) Int. Cl.: H04M 1/274

(54) **ERWEITERTES TELEFONBUCH FÜR EIN MOBILTELEFON**
EXTENDED TELEPHONE DIRECTORY FOR A MOBILE TELEPHONE
ANNUAIRE TELEPHONIQUE ETENDU POUR UN TELEPHONE MOBILE

(30) Priorität: 23.06.1999 DE 19928666
(43) Veröffentlichungstag der Anmeldung: 20.03.2002
(73) Patentinhaber: SIEMENS AKTIENGESELLSCHAFT, 80333 München (DE)
(72) Erfinder: SCHULZ, Holger, D-14059 Berlin (DE); SOFFEL, Georg, D-71549 Auenwald (DE); PIETRIGA, Marc, D-38302 Wolfenbüttel (DE); HASEMANN, Jörg-Michael, D-27321 Thedinghausen (DE); DEICHMANN, Volker, D-31137 Hildesheim (DE)
(86) Internationale Anmeldenummer: PCT/DE2000/002020
(87) Internationale Veröffentlichungsnummer: WO 2000/079773

(56) Entgegenhaltungen:
- EP-A- 0 730 387
- EP-A- 0 860 970
- EP-A- 0 915 604
- EP-A- 0 982 913
- WO-A-98/30053
- DE-A- 19 850 306

## Beschreibung

Die Erfindung betrifft ein Mobiltelefon, insbesondere ein Mobiltelefon nach dem GSM-Standard (GSM = Groupe Speciale Mobile), mit mindestens einem elektronischen Telefonbuch, wovon eines auf der SIM-Karte gespeichert ist, und das ggf. andere oder die anderen elektronischen Telefonbücher im nichtflüchtigen Speicher des Telefons angeordnet sind.

Mobiltelefone des Standes der Technik nach dem GSM-Standard verfügen am allgemeinen mindestens über ein elektronisches Telefonbuch, wobei mittlerweile fast immer zwei oder mehr Telefonbücher verwendet werden. Dabei ist eines dieser Telefonbücher auf der SIM-Karte (SIM = Subscriber Identity Modul), im folgenden als SIM bezeichnet, gespeichert und somit von einem Mobiltelefon auf ein anderes transportierbar. Das oder die anderen Telefonbücher liegen dagegen im nichtflüchtigen, internen Speicher, der beispielsweise durch EEPROMs bzw. Flash oder batteriegepufferten RAM-Bausteine gebildet sein kann.

Das interne Datenformat der SIM zur Speicherung von Telefonbucheinträgen schreibt vor, daß ein Telefonbucheintrag aus einer Folge von Ziffern (Telefonnummer) und einer zugehörigen Folge alphanumerischer Zeichen (Name) besteht. Die maximale Länge der Telefonnummer beträgt mindestens 20 Ziffern, und die maximale Länge des Namens kann zwischen 0 und 241 Zeichen betragen.

Für Telefonbucheinträge, die sich im nichtflüchtigen Speicher befinden, wird üblicherweise das gleiche Format verwendet, wobei sich die Maximallängen von denen auf der SIM-Karte unterscheiden können. Mit anderen Worten, die Anzahl der Attribute oder Merkmale eines Telefonbucheintrags, wobei in diesem Fall ein Attribut eine Telefonnummer oder ein Name ist, wird somit, bislang von GSM-Standard und SIM-Karte festgeschrieben und beträgt zwei.

Da bislang die Anzahl der Attribute für Telefoneinträge einer SIM festgeschrieben war, ist eine flexible Nutzung des Telefonbuchs eines Mobiltelefons, beispielsweise die Gruppierung von Telefonnummern nach gewissen Eigenschaften wie dienstlich oder privat, nicht möglich.

Das Dokument EP-A-0 860 970 offenbart ein Verfahren zur Verwaltung eines elektronischen Telefonbuchs bzw. einer Telefonnummerndatenbank, wie sie beispielsweise auf einer SIM-Karte eines Mobiltelefons besteht. Die Telefonnummerndatenbank ist in zwei Speicherbereiche eingeteilt, nämlich in einen ersten Speicherbereich, in dem Telefonnummern angeordnet sind, welche über ein Kurzwahlverfahren angesprochen werden können, und in einen zweiten Speicherbereich, in dem Telefonnummern angeordnet sind, die nicht durch ein Kurzwahlverfahren angesprochen werden können. Soll nun eine Telefonnummer in dem zweiten Speicherbereich ohne Kurzwahleigenschaft an einen Speicherort in dem ersten Speicherbereich mit Kurzwahleigenschaft verschoben werden, so wird die zu verschiebende Telefonnummer zuerst in einen Zwischenspeicher verschoben, die Nummer am Zielort des ersten Speicherbereichs an den Ausgangsort des Speicherbereichs der zu verschiebenden Nummer verschoben und anschließend die zu verschiebende Nummer aus dem Zwischenspeicher an den Zielort in dem ersten Zwischenspeicher gebracht.

Das Dokument WO 98/30053 zeigt eine Mobilfunkeinheit, die ein auf einer SIM-Karte gespeichertes Telefonbuch und ein in einem EEPROM der Mobilfunkeinheit gespeichertes Telefonbuch aufweist. Zur leichten Auswahl von Telefonbucheinträgen werden die beiden Telefonbücher in einer Zuordnungstabelle zusammengefasst, und es werden Kurzwahlnummern bestimmten Telefonbucheinträgen zugeordnet.

Das Dokument EP-A-0 915 604 offenbart ein Verfahren zum Durchsuchen einer Datenbank nach einem bestimmten Eintrag, insbesondere zum Suchen nach einem Eintrag in einem Telefonbuch, das in einem Mobiltelefon gespeichert ist. Die verbesserte Suche nach einem Telefonbucheintrag erfolgt dadurch, dass, beginnend mit der Eingabe eines bestimmten Buchstabens, alle Variationen an Einträgen angezeigt werden, die den eingegebenen Buchstaben sowie einen unterschiedliche zweiten Buchstaben aufweisen. Wird nun auch der zweite Buchstabe des Eintrags festgelegt, so erscheinen alle Variationen der ersten beiden eingegebenen Buchstaben mit einem dritten variablen Buchstaben, der in einem folgenden Schritt ebenfalls spezifiziert werden kann. Durch wiederholtes Eingeben der jeweiligen folgenden Buchstaben wird so ein bestimmter Datenbankeintrag bzw. Telefonbucheintrag gefunden.

Der Erfindung liegt die Aufgabe zugrunde, erweiterte Anwendungen über Telefonbucheinträge zu bekommen, insbesondere Gruppen von Telefonbucheinträgen zu bilden, und auf diese Weise die Telefonnummern beispielsweise nach privaten, geschäftlichen oder anderen Kriterien zu trennen; und es soll das bisher durch den GSM-Standard festgeschriebene, in der Länge beschränkte Format der Anzahl der Attribute überwunden werden.

Diese Aufgabe wird erfindungsgemäß durch die Merkmale des Patentanspruchs 1 gelöst. Weitere vorteilhafte Ausgestaltungen sind Gegenstand der abhängigen Patentansprüche.

Erfindungsgemäß wird jedes elektronische Telefonbuch eines Mobiltelefons durch jeweils eine sich im nichtflüchtigen Speicher des Mobiltelefons befindliche Datenbank ergänzt, wobei jede Datenbank genau einem bestimmten Telefonbuch zugeordnet ist. Die eindeutige Zuordnung erfolgt durch einen Schlüssel.

Dabei ist vorzugsweise jeder Datenbankeintrag über eine Telefonnummer indiziert und verfügt über ein sogenanntes Attributsdatenfeld, das aus einer Liste von Attributsbezeichner-Attributswert-Paaren besteht, wobei ein Attributsbezeichner die Natur des Attributswertes spezifiziert, z.B. Adresse, und ein Attributswert den Wert des Attributs darstellt, z.B. die zur Telefonnummer zugehörige Adresse. Der Attributswert kann leer bleiben, wenn die Existenz des Attributs als Information ausreicht, z.B. Fahrgemeinschaft; und wenn es nur eine gibt, braucht diese nicht mit einem Wert näher spezifiziert werden.

Beim Zugriff auf einen Eintrag in einem Telefonbuch wird zunächst automatisch geprüft, ob zu diesem Telefonbuch eine Datenbank existiert. Wenn dies zutrifft, können die in der Datenbank stehenden Zusatzinformationen über die Telefonnummer des obigen Eintrags als Schlüssel zugängig gemacht werden. Vorzugsweise hat die einem Telefonbuch zugeordnete Datenbank die Form eines Erweiterungstelefonbuchs. Es können auch jedem Telefonbuch mehrere Erweiterungstelefonbücher zugeordnet werden.

Die Vorteile der Erfindung ergeben sich aus der Anzahl der möglichen Attribute. Denkbare zusätzliche Attribute für Telefonnummern sind:
A Faxfähig, SMS-fähig, Voice-fähig, Email-fähig:
   Mit diesem Attribut gekennzeichnete Telefonnummern ermöglichen beim Versenden von Textnachrichten die Wahl eines entsprechenden Service.
B Privat, geschäftlich, usw.:
   Mit diesem Attribut gekennzeichnete Telefonnummern können bestimmte Gruppen zugeordnet werden, beispielsweise die Gruppe der privaten Telefonnummern oder die der geschäftlichen Telefonnummern. Damit kann der Zugriff auf das Telefonbuch erleichtert werden, in dem der Benutzer zuerst die Gruppe angibt, in der er suchen möchte, und dann anschließend beispielsweise alphabetisch innerhalb der gewählten Gruppe nach dem gewünschten Teilnehmer sucht.
C Vorstand, Leitungskreis, usw.
   Diese Attribute können Gruppen bezeichnen, denen der Benutzer Textnachrichten, Faxnachrichten oder Voice-Nachrichten schicken möchte. In Verbindung mit Attribut A könnte die Auswahl der Übertragungsmethode automatisch geschehen. Ferner könnte über diese Attribute das Mobiltelefon automatisch Konferenzschaltungen mit den entsprechenden Gruppenmitgliedern schalten.
D. Adresse, usw.
   Bei diesen Attributen gehört im Gegensatz zu den bisherigen zu dem Attribut "Adresse" ein Attributswert, nämlich die zur Telefonnummer zugehörige Adresse. Diese könnte dem Benutzer als zusätzliche Information dienen oder bei dem Versand einer Faxnachricht in den Faxkopf oder Faxheader eingebunden werden.
E. Sprache:
   Der Wert des Attributs Sprache gibt beispielsweise an, welchen Sprache der Faxkopf haben soll.
F. Alternative Rufnummer:
   Der Wert dieses Attributs bestimmt eine alternative Rufnummer, die automatisch gewählt wird, wenn die primäre Nummer beispielsweise besetzt oder nicht erreichbar ist.
G. Klingelton:
   Der Attributswert definiert den Klingelton, um beispielsweise durch die Tonhöhe oder den Klang eine akustische Unterscheidung eines Anrufs von der gekennzeichneten Nummer von anderen Nummern zu erreichen.
H. Antwortmethode:
   Der Attributswert gibt an, ob ein Anruf von der zugeordneten Telefonnummer automatisch angenommen werden soll oder nicht. Eine mögliche Methode wäre es, den Anruf anzunehmen, um dann einen bestimmten kurzen Text abzuspielen (Voicemessage), oder daß das Mobiltelefon die anrufende Telefonnummer speichert und per Email oder Fax den Mobiltelefoninhaber von dem Anrufversuch bzw. eventuell von dem Inhalt informiert.

Bevorzugte Ausführungsformen der Erfindung werden nachfolgend anhand der Figuren näher erläutert.
Fig.1 zeigt in schematischer Darstellung die erfindungsgemäßen Erweiterungen der Telefonbuchs eines Mobiltelefons,
Fig. 2 zeigt ein Beispiel für ein Attribut im erfindungsgemäß erweiterten Telefonbuch, und
Fig. 3 zeigt einen komplettierten, erweiterten Eintrag.

Für die Erfindung gibt es zwei Realisierungsvorschläge.

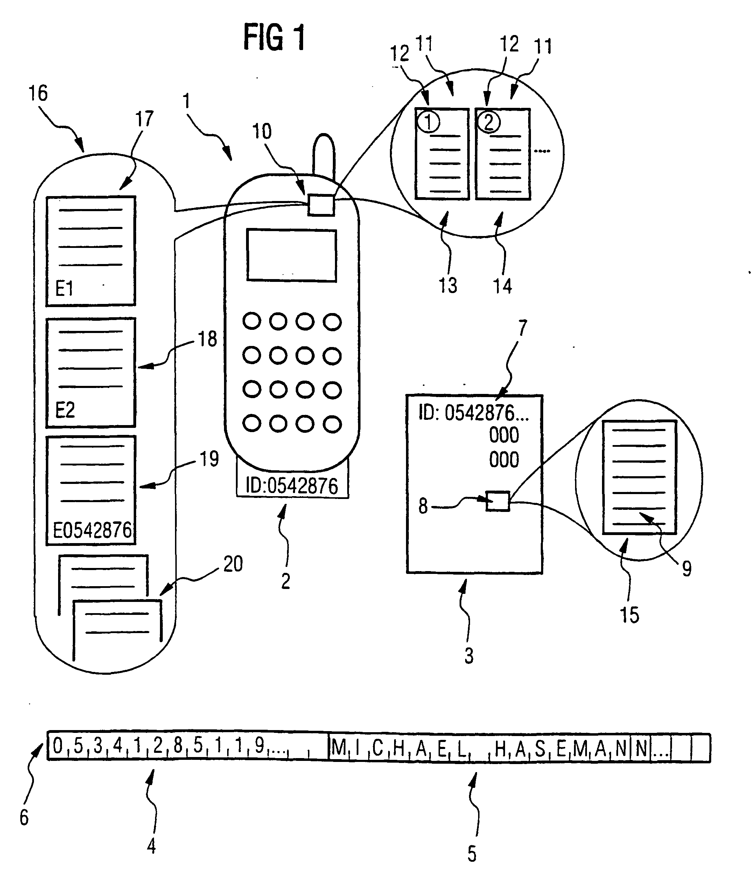

In Fig. 1 ist ein Mobiltelefon 1 mit seinen Zusatzeinrichtungen zu sehen; es weist u.a. eine SIM-Karte 2, 3 und einen nichtflüchtigen internen Speicher 10 auf. Ein Teil 11 des nichtflüchtigen Speichers 10 wird zur Speicherung von einem oder mehreren Telefonbüchern 13, 14 verwendet.

Eine SIM-Karte 2 ist in das Mobiltelefon 1 in schematischer Darstellung eingeführt. Die weitere Darstellung derselben SIM-Karte 3 dient der Erläuterung. Auf einer derartigen SIM-Karte 2, 3 befindet sich ein nichtflüchtiger Speicher 8, wovon ein Teil 9 als Telefonbuch 15 benutzt wird. Ferner enthält die SIM-Karte 2, 3 die sog. IMSI 7 (International Mobile Subscriber Identity) zur Identifizierung.

Ferner ist im unteren Teil der Fig. 1 ein Eintrag 6 eines Telefonbuchs 15 einer SIM-Karte 2, 3 dargestellt. Ein derartiger Eintrag 6 enthält die Telefonnummer 4 sowie den Namen 5 des Teilnehmers, d.h. zwei Attribute.

Die erste Realisierung ordnet jedem Standardtelefonbuch 13, 14 und/oder 15, das über die Standardspeichereinträge 6 aus Telefonnummer 4 und Name 5, gespeichert im nichtflüchtigen Teilspeicher 9 des Speichers 8 der SIM-Karte 2, 3 oder im nichtflüchtigen Teilspeicher 11 des Speicher 10 des Mobiltelefons 1, verfügt, ein zweites Erweiterungstelefonbuch 17, 18, 19 zu, das in einem weiteren Teilbereich 16 des nichtflüchtigen Speichers 10 angeordnet ist. Die Zuordnung erfolgt anhand einer eindeutig vergebenen Identifikationsnummer 12. Dargestellt ist in Fig. 1 für das Telefonbuch 13 die Identifikationnummer 1, die sich im Erweiterungstelefonbuch 17 als E1 wiederfindet. Für Telefonbuch 14 ist schematisch eine 2 dargestellt, dem das Erweiterungstelefonbuch 18 mit der Identifikationsnummer E2 zugeordnet ist. Analog ist dem Erweiterungstelefonbuch 19 mit der Nummer E0542876 entsprechend ein Telefonbuch mit der IMSI 0542876 zugeordnet, d.h. das Telefonbuch 15 der dargestellten SIM-Karte 3 zugeordnet.

Weiterhin können sich im Bereich 16 des nichtflüchtigen Speicher 10 weitere Erweiterungstelefonbücher 20 befinden, die sich auf SIM-Karten-Telefonbücher anderer SIM-Karten (nicht dargestellt) als die gerade in Benutzung befindlichen beziehen.

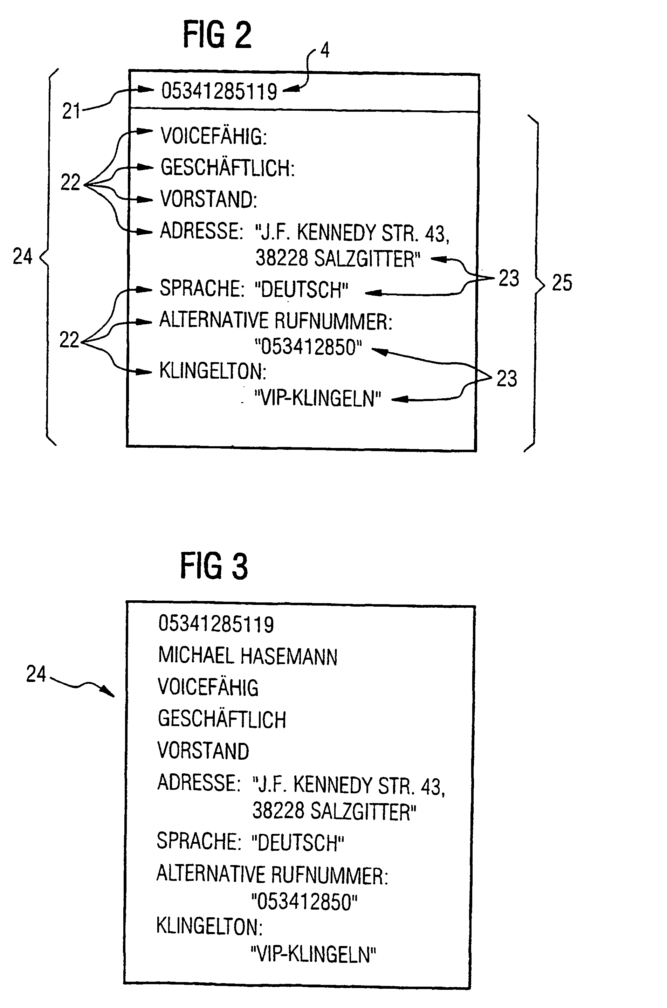

Fig. 2 erläutert nun die Einträge 24 eines Erweiterungstelefonbuchs 17, 18, 19, 20. Derartige erweiterte Einträge 24 eines Erweiterungstelefonbuchs bestehen aus der Telefonnummer 21 und einem Datenfeld 25 variabler Größe.

In diesem Datenfeld 25 sind die der Telefonnummer 21 zugeordneten Attribute, die aus einem Attributsbezeichner 22 und einem Attributswert 23 bestehen, wobei der Attributswert 23 bei bestimmten Attributsbezeichnern 22 leer sein kann. Beispielsweise müssen die Attributsbezeichner "Voicefähig", "Geschäftlich" oder "Vorstand" keinen Attributswert enthalten, können aber.

Der Attributswert spezifiziert die Natur des Attributsbezeichners. Dies ist aus den dargestellten Beispielen ersichtlich. Beispielsweise wird der Attributsbezeichner "Adresse" durch den Wert, d.h. die tatsächliche Adresse, spezifiziert. Für den Attributsbezeicher "Sprache" spezifiziert "Deutsch" den Wert. Analoges gilt für "Alternative Rufnummer" und "Klingelton".

Syntaktisch sind die Attributswerte in Hochkommata dargestellt und durch einen Doppelpunkt vom voranstehenden Attributsbezeichner abgetrennt. Der Attributswert kann entfallen, wenn die Existenz des Attributsbezeichners als Information ausreicht.

Beim Lesen wird der Eintrag im Standardtelefonbuch mit dem Eintrag im Erweiterungstelefonbuch anhand der Telefonnummer verknüpft und steht als erweiterter Telefonbucheintrag 24 zur Verfügung.

Beim Abspeichern wird der gesamte Telefonbucheintrag, der von einer entsprechenden Applikation zur Verfügung gestellt wird, in einen Standardtelefonbucheintrag 6, d.h. Telefonnummer und Name, und in einen erweiterten Telefonbucheintrag 24, d.h. Telefonnummer und Attribute (die unter Umständen leer sind) aufgespalten. Die Einträge werden getrennt abgespeichert. Das Abspeichern eines erweiterten Eintrags 24 kann entfallen, wenn die Attribute leer sind. In diesem Fall müßte allerdings geprüft werden, ob ein Eintrag im erweiterten Telefonbuch 17, 18, 19, 20 existiert. Dies müßte dann gelöscht werden, da sonst eine überflüssige Verknüpfung geschaffen werden würde.

Beim Suchen wird sequentiell gearbeitet. Abhängig vom Suchkriterium wird zunächst das Standardtelefonbuch, falls nach Telefonnummer oder Name gesucht wird, oder das Erweiterungstelefonbuch, falls nach bestimmten Attributen gesucht wird, durchsucht. Die gefundenen Einträge werden zu erweiterten Telefonbucheinträgen vervollständigt.

Das Löschen von Einträgen geschieht anhand der Telefonnummer, wobei sowohl der Eintrag im Telefonbuch als auch der Eintrag im erweiterten Telefonbuch gelöscht wird.

Bei der in Fig. 3 dargestellten zweiten Realisierung weichen Telefonbücher, die im nichtflüchtigen, internen Speicher 10 des Mobiltelefons 1 gespeichert sind, im Format von denjenigen, externen Telefonbüchern ab, die auf der SIM- Karte 2, 3 gespeichert sind. Dabei entsprechen die Einträge in die internen Telefonbücher im Format dem vorstehend in der ersten Realisierung beschriebenen erweiterten Telefonbucheintrag 24, wobei nunmehr neben der Telefonnummer 4, 21 das interne Telefonbuch auch den Namen 5 enthält.

Zu jedem externen Telefonbuch 15 gibt es also ein internes Telefonbuch 19, das wiederum eindeutig dem externen durch die IMSI (International Mobile Subscriber Identity) 7 zugeordnet ist. Lese- und Schreibzugriffe auf Telefonbücher, denen ein externes Telefonbuch zugeordnet ist, werden nur gestattet, wenn die SIM-Karte 2, 3 eingelegt ist.

Außer den internen Telefonbüchern, die den externen auf SIM-Karten gespeicherten Telefonbüchern zugeordnet sind, kann es auch weitere interne Telefonbücher geben.

Jedesmal, wenn das Telefon eingeschaltet wird oder eine SIM-Karte eingesteckt wird, werden die Einträge im SIM-Karten-Telefonbuch mit den Einträgen im zugeordneten internen Telefonbuch verglichen. Einträge, die im externen Telefonbuch existieren, im internen aber nicht, werden kopiert. Da keine Attribute in Einträgen von externen Telefonbüchern existieren, weil das Format für Einträge in SIM-Karten-Telefonbücher keine zuläßt, bleibt dieses Datenfeld in den Einträgen im zugeordneten internen Telefonbuch leer. Einträge, die im internen zugeordneten Telefonbuch existieren, aber nicht im externen, werden im internen gelöscht. Bei Einträgen, die in beiden Telefonbüchern existieren, aber unterschiedlich sind, wird der Eintrag im internen zugeordneten Telefonbuch vom Eintrag im externen Telefonbuch überschrieben.

Lesezugriffe auf Telefonbücher finden nur auf den internen Telefonbüchern statt. Bei L esezugriffen, die sich auf das SIM-Karten-Telefonbuch beziehen, wird auf das interne zugeordnete Telefonbuch zurückgegriffen.

Bei Schreibzugriffen werden auf Telefonnummer und Name reduzierte Einträge auf das SIM-Karten-Telefonbuch geschrieben und vollständige erweiterte Einträge in das interne Telefonbuch gespeichert.

## Patentansprüche

1. Mobiltelefon (1) mit einem nichtflüchtigen Speicher (10), das mindestens ein elektronisches Telefonbuch (13, 14, 15) aufweist, wovon eines (15) im Speicher (8) der SIM-Karte (2, 3) gespeichert ist und das ggf. andere oder die anderen Telefonbücher (14, 15) im nichtflüchtigen Speicher (10) liegen, wobei die Anzahl der Attribute, hier Telefonnummer (4) und Name (5), eines Standardtelefonbuchs (13, 14, 15) von der SIM-Karte (2, 3) festgeschrieben ist,
**dadurch gekennzeichnet,**
**dass** mindestens eine im nichtflüchtigen Speicher (10) angeordnete Datenbank (17, 18, 19) eindeutig jedem Telefonbuch (13, 14, 15) zugeordnet ist, wobei eine Zuordnung von jedem Eintrag eines Telefonbuchs zu einem entsprechenden Datenbankeintrag herstellbar ist, welcher ein Datenfeld variabler Größe bezüglich der Anzahl einem Telefonbucheintrag zugeordneten zusätzlichen Attributen aufweist.

2. Mobiltelefon nach Anspruch 1,
**dadurch gekennzeichnet,**
**dass** jedem Telefonbuch (13, 14, 15) genau eine Datenbank (17, 18, 19) zugeordnet ist.

3. Mobiltelefon nach einem der vorangegangenen Ansprüche,
**dadurch gekennzeichnet,**
**dass** jede Datenbank (17, 18, 19) einen Schlüssel (12) aufweist, der den eindeutigen Zusammenhang zwischen der Datenbank (17, 18, 19) und dem dazugehörigen Telefonbuch (13, 14, 15) herstellt.

4. Mobiltelefon nach einem der Ansprüche 1 bis 3,
**dadurch gekennzeichnet,**
**dass** jeder Datenbankeintrag (24) ferner ein Kennfeld (21) aufweist, wobei das Kennfeld (21) auf den entsprechenden Telefonbucheintrag (6) im entsprechenden Telefonbuch (13, 14, 15) hinweist.

5. Mobiltelefon nach Anspruch 4,
**dadurch gekennzeichnet,**
**dass** das Kennfeld (21) des Datenbankeintrags (24) die entsprechende Telefonnummer (4) enthält.

6. Mobiltelefon nach Anspruch 4 oder 5,
**dadurch gekennzeichnet,**
**dass** das Datenfeld (25) eines Datenbankeintrags (24) die zusätzlichen Attribute (22, 23) der Telefonnummer (4) des entsprechenden Telefonbuchs (13, 14, 15) enthält.

7. Mobiltelefon nach einem der vorangegangenen Ansprüche,
**dadurch gekennzeichnet,**
**dass** die Datenbanken (17, 18, 19, 20) die Form von Erweiterungstelefonbüchern haben.

8. Mobiltelefon nach einem der vorangegangenen Ansprüche,
**dadurch gekennzeichnet,**
**dass** sich die sogenannten internen Datenbanken oder Erweiterungstelefonbücher (19), die im nichtflüchtigen Speicher (10) gespeichert sind, im Format von den externen Telefonbüchern (15), die auf der SIM-Karte (2, 3) gespeichert sind, unterscheiden, wobei es zu jedem externen Telefonbuch (15) ein intern zugeordnetes Erweiterungstelefonbuch (19) gibt, das wiederum dem externen Telefonbuch (19) durch seine INSI (7) eindeutig zugeordnet ist.

## Claims

1. Mobile phone (1) having a non-volatile. memory (10), which has at least one electronic telephone directory (13, 14, 15), one (15) of which is stored in the memory (8) of the SIM card (2, 3) and, if applicable, the other telephone directory or directories (14, 15) is/are in the non-volatile memory (10), the number of attributes, here telephone number (4) and name (5), of a standard telephone directory (13, 14, 15) being prescribed by the SIM card (2, 3), **characterized in that** at least one database (17, 18, 19) which is arranged in the non-volatile. memory (10) is assigned precisely to each telephone directory (13, 14, 15), it being possible to bring about an assignment of each entry of a telephone directory to a corresponding database entry which has a data field of variable size with respect to the number of additional attributes assigned to a telephone directory entry.

2. Mobile phone according to Claim 1, **characterized in that** each telephone directory (13, 14, 15) is assigned precisely one database (17, 18, 19).

3. Mobile phone according to one of the preceding claims, **characterized in that** each database (17, 18, 19) has a key (12) which gives rise to the uniquely defined relationship between the database (17, 18, 19) and the associated telephone directory (13, 14, 15).

4. Mobile phone according to one of Claims 1 to 3, **characterized in that** each database entry (24) also has a characteristic diagram (21), the characteristic diagram (21) pointing to the corresponding telephone directory entry (6) in the corresponding telephone directory (13, 14, 15).

5. Mobile phone according to Claim 4, **characterized in that** the characteristic diagram (21) of the database entry (24) contains the corresponding telephone number (4).

6. Mobile phone according to Claim 4 or 5, **characterized in that** the data field (25) of a database entry (24) contains the additional attributes (22, 23) of the telephone number (4) of the corresponding telephone directory (13, 14, 15).

7. Mobile phone according to one of the preceding claims, **characterized in that** the databases (17, 18, 19, 20) are in the form of expansion telephone directories.

8. Mobile phone according to one of the preceding claims, **characterized in that** what are referred to as the internal databases or expansion telephone directories (19) which are stored in the non-volatile. memory (10) differ in format from the external telephone directories (15) which are stored on the SIM card (2, 3), there being an internally assigned expansion telephone directory (19) for each external telephone directory (15), said expansion telephone directory (19) in turn being assigned in a uniquely defined way by its IMSI (7) to the external telephone directory (19).

## Revendications

1. Téléphone mobile (1) comprenant une mémoire non volatile (10), qui présente au moins un annuaire électronique (13, 14, 15), dont un (15) est mémorisé dans la mémoire (8) d'une carte SIM (2, 3) et l'éventuel autre annuaire ou les autres annuaires (14, 15) se trouvent dans la mémoire non volatile (10), le nombre des attributs, ici numéro de téléphone (4) et nom (5), d'un annuaire standard (13, 14, 15) étant spécifié par la carte SIM (2, 3),
**caractérisé en ce**
**qu'**au moins une banque de données (17, 18, 19) disposée dans la mémoire non volatile (10) est affectée de manière univoque à chaque annuaire (13, 14, 15), une affectation de chaque entrée d'un annuaire pouvant être établie vers une entrée correspondante de la banque de données, cette entrée présentant un champ de données de grandeur variable en ce qui concerne le nombre d'attributs supplémentaires affectés à une entrée d'annuaire.

2. Téléphone mobile selon la revendication 1,
**caractérisé en ce**
**qu'**exactement une banque de données (17, 18, 19) est affectée à chaque annuaire (13, 14, 15).

3. Téléphone mobile selon l'une quelconque des revendications précédentes,
**caractérisé en ce**
**que** chaque banque de données (17, 18, 19) présente une clé (12) qui établit le rapport univoque entre la banque de données (17, 18, 19) et l'annuaire correspondant (13, 14, 15).

4. Téléphone mobile selon l'une des revendications 1 à 3,
**caractérisé en ce**
**que** chaque entrée (24) de banque de données présente en outre un champ caractéristique (21), le champ caractéristique (21) indiquant l'entrée correspondante (6) de l'annuaire dans l'annuaire correspondant (13, 14, 15).

5. Téléphone mobile selon la revendication 4,
**caractérisé en ce**
**que** le champ caractéristique (21) de l'entrée (24) de banque de données comprend le numéro de téléphone correspondant (4).

6. Téléphone mobile selon la revendication 4 ou 5,
**caractérisé en ce**
**que** le champ de données (25) d'une entrée (24) de banque de données comprend les attributs supplémentaires (22, 23) du numéro de téléphone (4) de l'annuaire correspondant (13, 14, 15).

7. Téléphone mobile selon l'une quelconque des revendications précédentes,
**caractérisé en ce**
**que** les banques de données (17, 18, 19, 20) ont la forme d'annuaires étendus.

8. Téléphone mobile selon l'une quelconque des revendications précédentes,
**caractérisé en ce**
**que** lesdites banques de données internes ou les annuaires étendus (19), qui sont mémorisés dans la mémoire non volatile (10), se distinguent, quant à leur format, des annuaires externes (15) qui sont mémorisés sur la carte SIM (2, 3), un annuaire étendu (19) affecté de manière interne existant pour chaque annuaire externe (15), cet annuaire étant à son tour affecté de manière univoque à l'annuaire externe (19) par sa INSI (7).
